# EUROPÄISCHE PATENTSCHRIFT

(11) **EP 2 096 415 B1**
(45) Veröffentlichungstag und Bekanntmachung des Hinweises auf die Patenterteilung: **18.09.2013**
(21) Anmeldenummer: 08003764.1
(22) Anmeldetag: 29.02.2008
(51) Int. Cl.: G01D 4/00, G01R 11/04, G01R 21/133, G01R 22/06

(54) **Elektronischer Elektrizitätszähler für Haushaltsanwendungen (Haushaltszähler)**
Electronic household meter for household use (household meter)
Compteur électroménager pour applications domestiques (compteur domestique)

(43) Veröffentlichungstag der Anmeldung: 02.09.2009
(73) Patentinhaber: EMH metering GmbH & Co. KG, 19243 Wittenburg (DE)
(72) Erfinder: Sadek, Andreas, 22958 Kuddewörde (DE)
(74) Vertreter: Graalfs, Edo

(56) Entgegenhaltungen:
- DE-A1- 10 052 998
- US-A1- 2004 061 623

## Beschreibung

Die Erfindung bezieht sich auf einen elektronischen Haushaltszähler nach Patentanspruch 1.

Neue elektronische Hauhaltszähler bestehen üblicherweise aus einem Stromzählermodul und einer Befestigungs- und Kontaktiereinrichtung, die nachfolgend als Aufnahmeplattform bezeichnet wird. Das Zählermodul enthält alle Bauteile und Komponenten, die für die Funktionen eines derartigen Zählers erforderlich sind. Die Aufnahmeplattform weist Anschlussmöglichkeiten für die Versorgungsleitungen auf und kann ständig am Anbringungsort verbleiben während das Zählermodul lösbar mit der Plattform verbindbar ist.

Aus dem VDN Lastenheft für elektronische Haushalteszähler in der Version 1.02 (Ausgabe März 2007) ist bekannt, die Verbindung des Gehäuses eines Zählermoduls mit Hilfe von zapfenartigen Vorsprüngen zu bewerkstelligen, welche in entsprechenden Ausnehmungen der Plattform eingreifen. Ein Plombierelement, das sich durch das Gehäuse des Zählermoduls mit einer Aufnahmeplattform bis zur Plattform hin erstreckt, verriegelt das Gehäuse an der Plattform. Die Verriegelung kann nur aufgehoben werden, wenn das Plombierelement gelöst wird. Bei Entnahme des Zählers werden in der Aufnahmeplattform die Kontakte des Zählermoduls kurzgeschlossen. Diese Anordnung hat den Vorteil, dass beim Lösen des Zählermoduls von der Aufnahmeplattform die Verbindung des Verbrauchers zum Versorger nicht unterbrochen wird und keine gefährlichen Arbeiten unter Spannung durchgeführt werden müssen. Ein Zähleraustausch lässt sich innerhalb kürzester Zeit bewerkstelligen, so dass für den Energieversorger Verluste nicht entstehen. Die Aufnahmeplattform ist entweder an einer Wand eines Gebäudes angebracht oder befindet sich innerhalb eines Zählerschranks oder ist ein Teil einer Wand des Zählerschranks. Eine vergleichbare Anordnung von Aufnahmeplattform und Zählermodul ist aus DE 100 52 998 B4 bekannt geworden.

Aus DE 20 2005 017 605 U1 oder aus DE 20 2005 017 607 U1 ist bekannt geworden, einen femauslösbaren ein- oder mehrpoligen Stromabschalter vorzusehen, etwa einen sogenannten LS-Schalter, mit dem es möglich ist, die Haushaltsversorgung von entfernter Stelle aus zu unterbrechen. Aus der zuerst genannten Schrift ist auch bekannt geworden, den fernauslösbaren Stromabschalter so anzuordnen und zu bauen, dass er vorzugsweise auf einer Befestigungsschiene einer Befestigungseinrichtung sitzt, die an den Anschraubgewinden für den Klemmendeckel befestigt ist.

Es ist ferner bekannt, das Zählermodul mit einer bidirektionalen Schnittstelle zu versehen, die nach DIN EN 62056-21 ausgeführt ist. Über dieser Schnittstelle kann eine Kommunikation mit dem Zählermodul auf optischem Wege vorgenommen werden, beispielsweise eine Auslesung der Messdaten des Zählers, eine Tarifansteuerung, eine Fehlererkennung, eine Manipulationsüberwachung sowie auch eine Umprogrammierung der Software.

Allgemein besteht der Bedarf, unterschiedliche Zähler in Haushalten von Gebäuden aus der Ferne abzulesen. Dies betrifft in erster Linie elektronische Haushaltszähler, jedoch auch andere Zähler, wie sie für Wasser, Gas, Wärme und andere Messgrößen eingesetzt werden. Ferner besteht seitens der Energieversorger der Wunsch, sowohl die Zufuhr der elektrischen Energie, als auch der Gasversorgung aus der Ferne unterbrechen zu können.

Der Erfindung liegt die Aufgabe zugrunde, einen elektronischen Haushaltszähler so auszubilden, dass eine Fernauslesung und Fernbetätigung mit einfachsten Mitteln erfolgen kann.

Diese Aufgabe wird durch die Merkmale der Patentansprüche 1 gelöst.

Bei dem elektronischen Haushaltszähler nach Patentanspruch 1 weisen das Zählermodul und die Aufnahmeplattform zusammenwirkende erste bidirektionale Schnittstellenkomponenten auf für die Übertragung von Daten bzw. Steuerbefehlen vom Zählermodul zur Aufnahmeplattform und umgekehrt. Die Schnittstellenkomponente der Aufnahmeplattform ist mit einer zweiten Schnittstelle an der Aufnahmeplattform verbunden für den Empfang und oder das Senden von Daten bzw. Steuerbefehlen über einen Fernkommunikationskanal.

Bei dem erfindungsgemäßen elektronischen Haushaltszähler sind alle Komponenten, welche zum Fernauslesen von Zählerdaten und anderen Daten und zur Übertragung von Steuerbefehlen auf das Zählermodul entweder in der Aufnahmeplattform oder in dem Zwischenmodul erforderlich sind, vorgesehen. Bei einem Wechsel des Zählermoduls müssen daher keine Vorkehrungen getroffen werden, um eine Femauslesung zu bewerkstelligen. Vorteilhaft können mit dem Zwischenmodul bereits installierte Haushaltszähler um eine Femauslesung erweitert werden.

Die Femauslesung der Meßdaten des Zählermoduls, die Steuerung von Zählereigenschaften des Zählermoduls, wie Tarifsteuerung usw., Fehlererkennung, Manipulationsüberwachung und Umprogrammierung erfolgt erfindungsgemäß stets über die Kommunikationsschnittstelle in der Aufnahmeplattform bzw. dem Zwischenmodul.

Die Vorteile der Erfindung liegen in der Verringerung des Montage- und Verdrahtungsaufwands am Einbauort des Zählers, und in der kompakten und günstigen Bauweise. Außerdem kann ein Schutz gegen Fremdzugriff gegeben sein, wenn die Kommunikationsschnittstelle insbesondere an der Rückseite der Aufnahmeplattform angebracht wird.

Es wurde bereits beschrieben, dass eine Femauslösung eines Stromausschalters möglich ist. In einer Ausgestaltung der Erfindung ist der Stromausschalter in der Aufnahmeplattform oder im Zwischenmodul vorgesehen.

Für die Fernübertragung von Daten und Steuerbefehlen bieten sich verschiedene Übertragungsmöglichkeiten an, z. B. analoge oder digitale drahtbehaftete Telekommunikationskanäle, Datenübertragung über ein Mobilfunksystem, Datenübertragung über Stromleitung, über ein digitales Netzwerk oder eine Funkverbindung.

Bei einer anderen Ausgestaltung der Erfindung weist die Aufnahmeplattform mindestens eine weitere Schnittstellenkomponente auf, die über einen drahtlosen oder drahtbehafteten Verbindungskanal mit einem weiteren Verbrauchsmeßgerät verbindbar ist, wie z. B. einem Gas- und/oder Wasser- und/oder Wärmezähler. Somit kann über eine einzige Kommunikationsschnittstelle in der Aufnahmeplattform bzw. im Zwischenmodul ein Auslesen bzw. eine Ansteuerung von mehreren Verbrauchsmeßgeräten stattfinden.

Zwei Ausführungsbeispiele der Erfindung werden nachfolgend anhand von Zeichnungen näher erläutert.
- Fig. 1: zeigt äußert schematisch eine erste Ausführungsform eines Haushalts- zählers nach der Erfindung.
- Fig. 2: zeigt ebenfalls schematisch ein zweites Beispiel eines Haus- haltszählers.

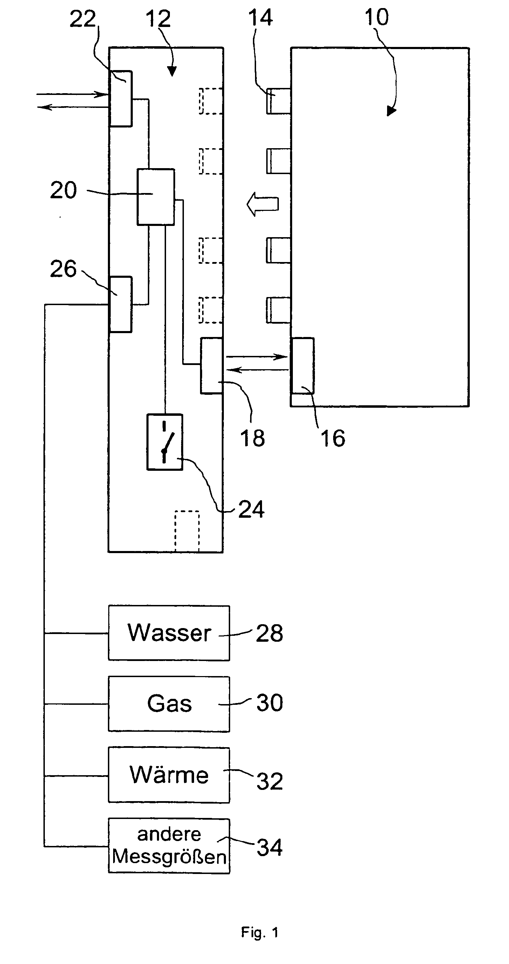

In Fig. 1 ist ein Zählermodul 10 dargestellt und eine separate Aufnahmeplattform 12. Das Zählermodul 10 weist Kontaktmesser 14 auf, die eine elektrische Verbindung mit der Aufnahmeplattform 12 herstellen, wenn das Zählermodul 10 mit der Aufnahmeplattform 12 verbunden wird, und zwar auch mechanisch, was nicht dargestellt ist. Die mechanische Verbindung ist derart verriegelt, dass sie nur durch Lösen eines Plombierelements trennbar ist. Dies ist nicht gezeigt und an sich bekannt. Die Aufnahmeplattform 12 ist z. B. an der Wand eines Gebäudes, innerhalb eines Schaltschranks oder dergleichen befestigt. Zu der Aufnahmeplattform 12 hin führen Versorgungsleitungen eines elektrischen Energieversorgers, und von der Aufnahmeplattform 12 fort führen Leitungen zum Haushalt, zu dem der Haushaltszähler gehört. Dies ist ebenfalls nicht dargestellt und bekannt. Das Zählermodul 10 enthält alle notwendigen Komponenten, die für einen modernen Elektrizitätszähler erforderlich sind. Das Zählermodul kann auch die erforderlichen Stromwandler für das Messen des Stroms enthalten.

Das Zählermodul 10 kann gemäß dem vorne zitierten VDN Lastenheft eine bidirektionale optische D0 Schnittstelle nach DIN EN 62056-21 enthalten. Die Aufnahmeplattform enthält das Gegenstück 18. Die Schnittstellenkomponente 18 ist mit einem Mikrorechnersystem 20 in der Aufnahmeplattform 12 verbunden. Die Aufnahmeplattform 12 enthält eine weitere Schnittstellenkomponente 22 für eine Kommunikation über einen Fernkanal. Mit Hilfe der Schnittstellenkomponenten 16, 18 und 22 und des Mikrorechnersystems 20 ist eine Femauslesung der Messdaten des Zählermoduls 10 möglich sowie auch eine Steuerung von Zählereigenschaften, wie z. B. eine Tarifsteuerung. Außerdem kann eine Fehlererkennung, Manipulationsüberwachung sowie ein Update für die Software des Zählermoduls vorgenommen werden.

In der Aufnahmeplattform 12 ist ferner ein Stromausschalter 24 angeordnet. Er kann ebenfalls über die Schnittstellenkomponente 22 durch Fernsteuerung betätigt werden. Dies geschieht ebenfalls über das Mikrorechnersystem 20. Damit kann der versorgte Haushalt - z. B. bei Mieterwechsel - vom Netz getrennt werden, ohne dass Personal vor Ort anwesend sein muss. Durch Trennung von Zähler und Stromausschalter wird vorteilhaft eine thermische Entkopplung beider Komponenten erreicht.

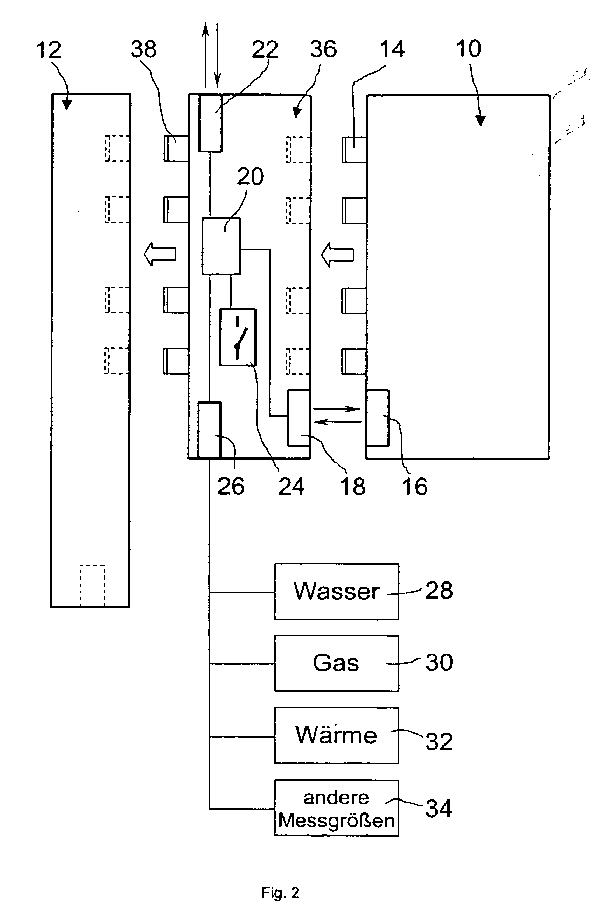

In der Aufnahmeplattform 12 ist schließlich eine Schnittstellenkomponente 26 vorgesehen, die in Verbindung steht mit einem Wasserzähler 28, einem Gaszähler 30, einem Wärmezähler 32 oder Messgeräten für andere Messgrößen 34. Diese Zähler geben ihre Daten digital auf die Schnittstellenkomponente 26 und damit auch auf das Mikrorechnersystem 20, so dass diese ebenfalls über den Fernkanal und die Schnittstellenkomponente 22 ausgelesen werden können. Mithin sammelt das Mikrorechnersystem 20 alle eingehenden Messgrößen zum Elektrizitäts-, Gas-, Wasser- und Wärmeverbrauch oder anderer Verbräuche. Die Speicherung der Daten kann in dem Zähler erfolgen oder in einem Speicher des Mikrorechnersystems 20. Soweit in dem Beispiel nach Fig. 2 gleiche Komponenten wie in Fig. 1 verwendet werden, werden gleiche Bezugszeichen verwendet. Der Unterschied zur Ausführungsform nach Fig. 1 besteht in Fig. 2 darin, dass zwischen dem Zählermodul 10 und der Aufnahmeplattform 12 ein Zwischenmodul 30 angeordnet ist. Die Kontaktmesser des Zählermoduls 14 wirken mit Kontakttulpen im Zwischenmodul 36 zusammen, und das Zwischenmodul 36 hat seinerseits Kontaktmesser 38, die mit den Kontakttulpen der Aufnahmeplattform 12 zusammenwirken. Mithin können die Module 10, 36 und die Aufnahmeplattform 12 über eine Steckverbindung elektrisch miteinander verbunden sein. Die Verbindung erfolgt auch mechanisch in verriegelter Form derart, dass ein Lösen der Verriegelung nur nach Entfernung einer Plombe stattfinden kann. Dies ist in der Zeichnung nicht dargestellt.

Wie ferner aus Fig. 2 zu erkennen ist, sind alle elektronischen Komponenten, die bei der Ausführungsform nach Fig. 1 in der Aufnahmeplattform 12 untergebracht sind, nunmehr in dem Zwischenmodul 36 angeordnet. Ihre Verschaltung und Verbindung ist in gleicher Weise wie in Fig. 1 vorgenommen, so dass eine nähere Erläuterung hierzu nicht mehr notwendig ist.

Das Vorsehen eines Zwischenmoduls 36 hat den Vorteil, dass auch bei bereits eingebauten Haushaltszählern eine Femansteuerung und Femauslese durchgeführt werden kann.

## Patentansprüche

1. Elektrischer Haushaltszähler, mit einem elektrischen Zählermodul (10) und einer Aufnahmeplattform (12), die über Steckverbinderabschnitte elektrisch und über verriegelbare mechanische Verbindungsmittel miteinander verbindbar sind, ferner mit einem femansteuerbaren Stromabschalter (24), **dadurch gekennzeichnet, dass**
- das Zählermodul (10) und die Aufnahmeplattform (12) zusammenwirkende bidirektionale Schnittstellenkomponenten (16, 18) aufweisen für die Übertragung von Daten und Steuerbefehlen vom Zählermodul (10) zur Aufnahmeplattform (12) und umgekehrt und
- die Schnittstellenkomponente (18) der Aufnahmeplattform (12) mit einer zweiten Schnittstellenkomponente (22) in der Aufnahmeplattfonn (12) verbunden ist, die für den Empfang und/oder das Senden von Daten bzw. Steuerbefehlen über einen Fernkommunikationskanal ausgelegt ist.

2. Haushaltszähler nach Anspruch 1, **dadurch gekennzeichnet, dass** der Stromausschalter (24) in der Aufnahmeplattform (12) vorgesehen ist.

3. Haushaltszähler nach einem der Ansprüche 1 oder 2, **dadurch gekennzeichnet, dass** der Kommunikationskanal von einem analogen oder digitalen drahtbehafteten Telekommunikationskanal, einem Mobilfunkübertragungssystem, einer Stromleitung, einem digitalen Netzwerk oder einer anderen Funkverbindung gebildet ist.

4. Haushaltszähler nach Anspruch 1, **dadurch gekennzeichnet, dass** die zweite Schnittstellenkomponente (22) mit einer dritten Schnittstellenkomponente (26) in der Aufnahmeplattform (12) verbunden ist für die Verbindung mit einem drahtlosen oder drahtbehafteten Verbindungskanal mit mindestens einem anderen Haushaltszähler, wie einem Gas- und/oder Wasser- und/oder Wärmezähler und/oder einer anderen Verbrauchsgröße (28, 30, 32, 34)

## Claims

1. An electronic household meter having an electrical counter module (10) and a mounting platform (12) that can be connected together electrically via plug connector sections and mechanically lockable via connecting means, further having a remotely controllable circuit breaker (24), **characterized in that**
- the counter module (10) and the mounting platform (12) have interacting bi-directional interface components (16, 18) for transferring data and control commands from the counter module (10) to the mounting platform (12) and vice versa, and
- the interface component (18) of the mounting platform (12) is connected with a second interface component (22) in the mounting platform (12), which is designed for receiving and/or sending data, or respectively control commands, via a remote communication channel.

2. The household meter according to claim 1, **characterized in that** the circuit breaker (24) is provided in the mounting platform (12).

3. The household meter according to one of the claims 1 or 2, **characterized in that** the communication channel is formed by an analog or digital wired telecommunication channel, a wireless communication transmission system, a power supply line, a digital network, or another radio communications connection.

4. The household meter according to claim 1, **characterized in that** the second interface component (22) is connected to a third interface component (26) in the mounting platform (12) for the connection to a wireless or wired connection channel to at least one other household meter, such as a gas and/or water and/or heat meter and/or another consumption variable (28, 30, 32, 34).

## Revendications

1. Compteur domestique électrique, avec un module de comptage électrique (10) et une plateforme de réception (12) aptes à être reliés entre eux électriquement par des sections de raccordement par enfichage et par des moyens d'assemblage mécaniques verrouillables, et avec un coupe-circuit (24) télécommandé, **caractérisé en ce que**
- le module de comptage (10) et la plateforme de réception (12) comportent des composants d'interface bidirectionnels coopérants (16, 18), pour la transmission de données et d'ordres de commande du module de comptage (10) à la plateforme de réception (12) et inversement, et
- le composant d'interface (18) de la plateforme de réception (12) est relié à un deuxième composant d'interface (22) dans la plateforme de réception (12), lequel est conçu pour recevoir et/ou envoyer des données ou des ordres de commande par le biais d'un canal de télécommunication.

2. Compteur domestique selon la revendication 1, **caractérisé en ce que** le coupe-circuit (24) est prévu dans la plateforme de réception (12).

3. Compteur domestique selon l'une des revendications 1 ou 2, **caractérisé en ce que** le canal de communication est formé par un canal de télécommunication analogique ou numérique filaire, un système de radiotransmission mobile, une ligne électrique, un réseau numérique ou une autre liaison radio.

4. Compteur domestique selon la revendication 1, **caractérisé en ce que** le deuxième composant d'interface (22) est relié à un troisième composant d'interface (26) dans la plateforme de réception (12), pour le raccordement avec un canal de liaison filaire ou sans fil avec au moins un autre compteur domestique, tel qu'un compteur de gaz et/ou d'eau et/ou thermique et/ou d'une autre valeur de consommation (28, 30, 32, 34).
